# EUROPEAN PATENT APPLICATION

(11) **EP 3 300 241 A1**
(43) Date of publication of application: **28.03.2018**
(21) Application number: 17186596.7
(22) Date of filing: 17.08.2017
(51) Int. Cl.: H02M 7/483, H02M 1/12, H02M 1/32

(54) **MULTIPHASE MULTILEVEL POWER CONVERTER, CONTROL APPARATUS AND METHODS TO CONTROL HARMONICS DURING BYPASS OPERATION**

(30) Priority: 27.09.2016 US 201662400129 P; 18.10.2016 US 201615296287
(71) Applicant: Rockwell Automation Technologies, Inc., Mayfield Heights, OH 44124 (US)
(72) Inventor: CHENG, Zhongyuan, Kitchener, Ontario N2P 2X9 (CA); ZARGARI, Navid, Cambridge, Ontario N3C 3Y2 (CA)
(74) Representative: Grünecker Patent- und Rechtsanwälte PartG mbB

(57) **Abstract**

Power conversion systems, control apparatus, methods and computer readable mediums to operate a multiphase multilevel inverter that includes M inverter phase leg circuits that individually include N inverter stages with corresponding stage outputs connected in series between a reference node and a corresponding inverter phase output node, M being greater than 2, N being greater than 2, in which the stage outputs of a selected set of M of the inverter stages are bypassed, where the selected set includes a single inverter stage from each of the inverter phase leg circuits, and the selected set of inverter stages are connected to secondaries of a phase shift transformer at M different phase relationships to control harmonic distortion in a current of the transformer primary in response to a suspected inverter stage fault.

## Description

### REFERENCE TO RELATED APPLICATION

The present application claims priority to, and the benefit of, U.S. Provisional Application No. 62/400,129, filed September 27, 2016, the subject matter of which is incorporated herein by reference in its entirety.

### BACKGROUND INFORMATION

The subject matter disclosed herein relates to modular multilevel power conversion systems.

### BRIEF DESCRIPTION

Disclosed examples include power conversion systems, control apparatus, methods and computer readable mediums to operate a multiphase multilevel inverter that includes M inverter phase leg circuits that individually include N inverter stages with corresponding stage outputs connected in series between a reference node and a corresponding inverter phase output node, M being greater than 2, N being greater than 2, in which the stage outputs of a selected set of M of the inverter stages are bypassed, where the selected set includes a single inverter stage from each of the inverter phase leg circuits, and the selected set of inverter stages are connected to secondaries of a phase shift transformer at M different phase relationships to control harmonic distortion in a current of the transformer primary in response to a suspected inverter stage fault.

### BRIEF DESCRIPTION OF THE DRAWINGS

FIG. 1 is a schematic diagram illustrating an example three-phase multilevel inverter in a power conversion system.
FIG. 2 is a schematic diagram illustrating an example H-Bridge inverter stage.
FIG. 3 is a schematic diagram illustrating an example three-phase multilevel inverter having N stages for each phase leg circuit.
FIG. 4 is a schematic diagram illustrating an example three-phase multilevel inverter configuration with 3 inverter stages in each phase leg circuit.
FIG. 5 is a waveform diagram illustrating primary current and THD spectrum curves in the circuit of FIG. 4.
FIG. 6 is a schematic diagram illustrating an example three-phase multilevel inverter configuration with 3 inverter stages in each phase leg circuit in which a fault is suspected in an inverter stage.
FIG. 7 is a waveform diagram illustrating primary current and THD spectrum curves in the circuit of FIG. 6.
FIG. 8 is a schematic diagram illustrating another example three-phase multilevel inverter configuration with 3 inverter stages in each phase leg circuit in which a fault is suspected in an inverter stage.
FIG. 9 is a schematic diagram illustrating another example three-phase multilevel inverter configuration with 3 inverter stages in each phase leg circuit in which a fault is suspected in an inverter stage.
FIG. 10 is a schematic diagram illustrating yet another example three-phase multilevel inverter configuration with 3 inverter stages in each phase leg circuit in which a fault is suspected in an inverter stage.
FIG. 11 is a waveform diagram illustrating primary current and THD spectrum curves in the circuit of FIGs. 8-10.
FIG. 12 is a schematic diagram illustrating an example three-phase multilevel inverter configuration with 4 inverter stages in each phase leg circuit in which a fault is suspected in an inverter stage.
FIG. 13 is a waveform diagram illustrating primary current and THD spectrum curves in the circuit of FIG. 12.
FIG. 14 is a waveform diagram illustrating primary current and THD spectrum curves in the circuit of FIG. 12.
FIGs. 15 and 16 illustrate alternate reconfiguration bypass maps that can be used in the circuit of FIG. 12.
FIG. 17 is a schematic diagram illustrating an example three-phase multilevel inverter configuration with 5 inverter stages in each phase leg circuit in which a fault is suspected in an inverter stage.
FIG. 18 is a waveform diagram illustrating primary current and THD spectrum curves in the circuit of FIG. 17.
FIG. 19 is a waveform diagram illustrating primary current and THD spectrum curves in the circuit of FIG. 17.
FIGs. 20 and 21 illustrate alternate reconfiguration bypass maps that can be used in the circuit of FIG. 17.
FIGs. 22 and 23 are waveform diagrams illustrating primary current and THD spectrum curves in an example three-phase multilevel inverter configuration with 6 inverter stages in each phase leg circuit.
FIGs. 24 and 25 are waveform diagrams illustrating primary current and THD spectrum curves in an example three-phase multilevel inverter configuration with 7 inverter stages in each phase leg circuit.
FIGs. 26 and 27 illustrate alternate reconfiguration bypass maps that can be used in an example three-phase multilevel inverter configuration with 7 inverter stages in each phase leg circuit.
FIGs. 28 and 29 are waveform diagrams illustrating primary current and THD spectrum curves in an example three-phase multilevel inverter configuration with 8 inverter stages in each phase leg circuit.
FIGs. 30 and 31 illustrate alternate reconfiguration bypass maps that can be used in an example three-phase multilevel inverter configuration with 8 inverter stages in each phase leg circuit.
FIGs. 32 and 33 are waveform diagrams illustrating primary current and THD spectrum curves in an example three-phase multilevel inverter configuration with 9 inverter stages in each phase leg circuit.
FIGs. 34 and 35 are waveform diagrams illustrating primary current and THD spectrum curves in an example three-phase multilevel inverter configuration with 10 inverter stages in each phase leg circuit.
FIGs. 36 and 37 illustrate alternate reconfiguration bypass maps that can be used in an example three-phase multilevel inverter configuration with 10 inverter stages in each phase leg circuit.
FIGs. 38 and 39 are waveform diagrams illustrating primary current and THD spectrum curves in an example three-phase multilevel inverter configuration with 11 inverter stages in each phase leg circuit.
FIGs. 40 and 41 illustrate alternate reconfiguration bypass maps that can be used in an example three-phase multilevel inverter configuration with 11 inverter stages in each phase leg circuit.
FIGs. 42 and 43 are waveform diagrams illustrating primary current and THD spectrum curves in an example three-phase multilevel inverter configuration with 12 inverter stages in each phase leg circuit.

### DETAILED DESCRIPTION

Power conversion systems convert input electrical energy from one form to another to drive a load. One form of power conversion system is a motor drive for variable speed operation of an electric motor load. Modular multiphase, multilevel converters are sometimes used for high voltage motor drive applications, including flying capacitor designs, neutral point clamped (NPC) designs, cascaded NPC (CNPC) designs, cascaded H-bridge (CHB) designs as well as other cascaded and hybrid topologies. Modular multilevel converters provide an output to drive a load using modules, sometimes referred to as cells or stages, connected in series with one another between a common connection point (e.g., a neutral connection) and a driven load. In a multiphase example, an integer number M phase leg circuits each include an integer number N inverter modules, also referred to as stages or cells, whose outputs are connected in series with one another between the neutral point and a driven motor phase, where M and N are greater than 2. In each phase leg circuit, the individual stages can provide one of two or more output voltage levels at any given time, and the series connection of multiple stages provides an output voltage for the corresponding phase load. The individual inverter stages provide inverter type operation to generate one of two or more output voltage levels using internal switches. Because the inverter stages are connected in series, a failure or fault in one of the stages can cause a disruption in the output power provided to the driven load.

Bypass circuitry is included in the individual stages or externally, to selectively short-circuit the output of a faulted inverter stage while the remaining stages continue delivering output power to the load. In addition, a group of M inverter stages are bypassed together, one from each phase leg circuit, in order to balance the phase circuit output signals driving the load, with the switching control circuit adjusting a modulation index accordingly to drive the remaining N-1 non-bypassed stages. However, conventional bypass operation in a multiphase multilevel power converter often results in increased total harmonic distortion (THD) in the source current from an AC power grid or other power source due to unbalanced phase relationships in the remaining N-1 non-bypassed stages. In particular, a phase shift transformer (PST) is typically provided at the input side of the power converter, including multiple phase shifted secondary circuits to provide a number of isolated DC supplies in the individual inverter stages. Each individual inverter stage typically includes an on-board rectifier that receives single or multiphase isolated AC input power to create an isolated DC voltage for selective switching by an H-bridge or other internal switching circuit of the inverter stage. The phase shift transformer can also provide step up or step down accommodation of an input supply voltage level to a specific driven motor load voltage rating.

The phase shift transformer provides the secondary circuits at different phase relationships relative to one another. In the ideal case, with all inverter stages operating where the load currents for the secondary windings are balanced, the phase relationship of the secondary circuits promotes cancellation of harmonics on the primary side such that the grid side or supply-side current does not suffer from high THD. The PST reduces primary current harmonics by phase shifting the harmonic current so that some of the harmonic components are cancelled in the primary such that the harmonics reflected into the primary winding from the secondary windings preferably add to zero. However when an inverter stage is bypassed due to a fault or suspected fault, the bypassed stage consumes no power, and the original balanced pattern will not be maintained. In addition, conventional bypassing is done on a group basis, with an inverter stage from each phase leg being bypassed at the same time, and the bypassed group of inverter stages are each fed from transformer secondary windings generally in phase with one another. As a result, the net sum of harmonics in the primary increases and the line current THD will increase. For example, a 9-cell, 18 pulse cascaded H-bridge (CHB) converter using a typical phase shift transformer operates at around 2.7% THD for the line current during normal operation, but bypassing three cells at the same or similar phase relationship dramatically increases the line current THD, for example to around 13%.

The present disclosure provides bypassing apparatus, power conversion systems and techniques to mitigate or control THD during bypass operation without sacrificing power converter performance and the ability to selectively bypass suspected or known faulted inverter stages. Certain examples can significantly decrease the bypass mode line current THD, for example, by 60% to 80% depending on the number of inverter stages in the power conversion system.

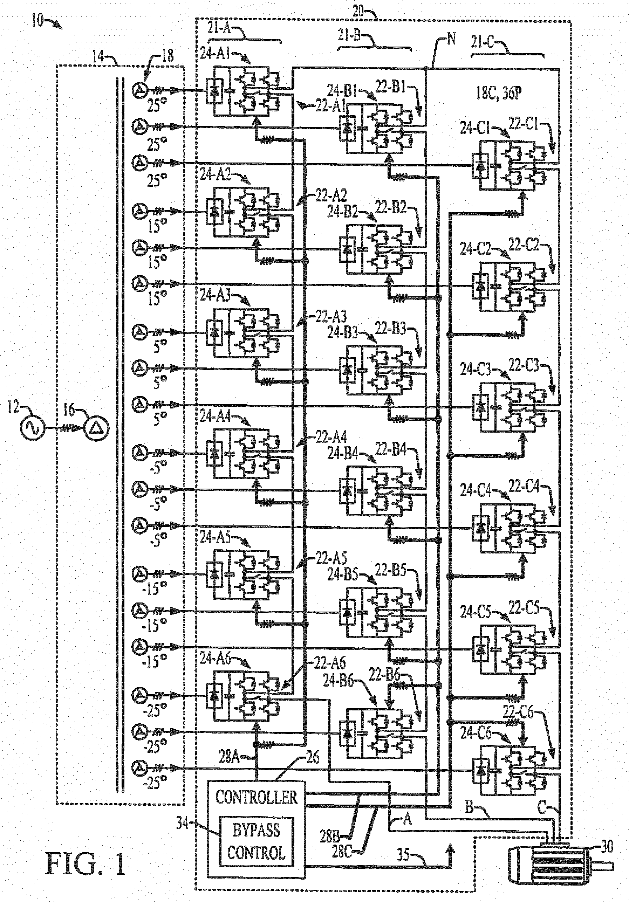

Referring initially to FIGs. 1-3, the present disclosure provides power conversion systems 10, control apparatus 26, 34, methods and computer readable mediums 29 to operate a multiphase multilevel inverter 20. FIG. 1 illustrates an example three-phase multilevel inverter 20 in a power conversion system 10 in which various concepts of the present disclosure can be employed. Disclosed embodiments in general provide bypass operation control for a variety of different configurations of multiphase multilevel inverters 20 that include an integer number M inverter phase leg circuits 21-A, 21-B, 21-C, where the individual phase leg circuits 21 include an integer number N inverter stages 24 with corresponding stage outputs 22 connected in series between a reference node (e.g., an output neutral labelled "N" in the drawings) and a corresponding inverter phase output node A, B or C, where M and N are greater than 2. In operation, the stage outputs 22 of a selected set of M of the inverter stages 24 are bypassed concurrently in response to a suspected inverter stage fault in one stages of the selected set. The selected set includes a single inverter stage 24 from each of the inverter phase leg circuits 21, and the selected set of inverter stages 24 are connected to secondaries 18 of a phase shift transformer 14 at M different phase relationships to control harmonic distortion in a current of the transformer primary 16. The faulted stage 24 in one example can be bypassed automatically by the power cell controller or by a central controller. The central controller then selects the other M-1 stages to make a matched set of stages for lowest THD.

The groupings of the inverter stages 24 can be done by a variety of different techniques or approaches such as respects find transformer secondary configuration compared to conventional phase shift transformers in order to accommodate physical placement of inverter stage modules in a given enclosure. Another technique involves remapping the switching control signals and bypass control signals provided by a power converter controller 26. In another approach, internal cabling connection between the secondary windings of the phase shift transformer and the inverter stages or modules can be used. Thus, the concepts of the present disclosure can be adapted for retrofitting existing multilevel multiphase inverters by re-cabling and/or reconfiguration of controller software or firmware, or by installation of a new phase shift transformer 14. FIG. 1 shows an example power conversion system 10 with a three-phase CHB inverter-based motor drive 20 with a controller 26 providing switching control signals 28 to CHB inverter stages 24 (labelled "CELL" or "STAGE" in the drawings). The example in FIG.

1 is a CHB inverter-based motor drive power conversion system 10, including a three-phase multilevel inverter 20 and a controller 26 that provides switching control signals 28 to individual CHB inverter stages 24. Although illustrated in the context of a multiphase inverter 20 with six inverter stages 24 for each of three motor load phases A, B and C, the various aspects of the present disclosure may be implemented in association with single phase or multiphase, multilevel inverters having any integer number "N" inverter stages 24 in each phase leg circuit 21, where N is greater than two. In addition, although the illustrated embodiments utilize H-Bridge stages 24 cascaded to form multilevel inverters 20 for each phase of the motor drive system 10, NPC or other types and forms of inverter stages 24 can be used, such as a stage with a switching circuit having more or less than four switching devices, wherein the broader aspects of the present disclosure are not limited in scope by the illustrated embodiments. In certain non-limiting examples, the inverter stages 24 are H-bridge stages individually including a rectifier circuit and four switching devices S1-S4 coupled between the corresponding rectifier circuit and the corresponding stage output 22.

The motor drive system 10 in FIG. 1 includes a phase shift transformer 14 having a multiphase primary 16 (a delta configuration in the illustrated embodiment) receiving three-phase power from an AC power source 12. The illustrated transformer 14 includes 18 three-phase secondaries 18, with N = 6 sets of M = 3 extended delta-configured three-phase secondaries 18, with each set being at a different phase relationship. Although the primary 16 and the secondaries 18 are configured as delta windings in the illustrated example, "Y" connected primary windings and/or zigzag-connected secondary windings can alternatively be used. In addition, while the transformer 14 has three-phase primary and secondary windings 16, 18, other single or multiphase implementations can be used. Each of the three-phase secondaries 18 in FIG. 1 is coupled to provide AC power to drive a three-phase rectifier of a corresponding inverter stage 24 of the three-phase multilevel inverter 20. In this example, the individual inverter stages 24 include on-board rectifier circuits. In other examples, the inverter modules or stages 24 can be configured to directly receive DC power from an external DC source (not shown) that derives power from a corresponding secondary 18.

The multilevel inverter 20 includes three inverter phase leg circuits 21-A, 21-B and 21-C. The individual inverter phase leg circuits 21-A, 21-B and 21-C include N = 6 inverter stages 24 connected in series between corresponding inverter phase output node (e.g., motor lead) A, B or C and the neutral N to provide a phase voltage signal at the inverter phase output node A, B or C. The inverter 20 in this example includes 18 inverter stages 24, each connected to a corresponding secondary 18 of the transformer 14 as shown. The inverter 20 is a 13-level inverter with N=6 cascaded H-Bridge inverter stages 24A-1 through 24A-6 of a first inverter phase leg circuit 21-A having outputs 22A-1 through 22A-6 connected in series with one another (cascaded) between the neutral N and the first winding A of a three-phase motor load 30. Six inverter stages 24B-1 through 24B-6 of a second inverter phase leg circuit 21-B provide series connected voltage outputs 22B-1 through 22B-6 between the neutral N and the second motor phase winding B, and six inverter stages 24C-1 through 24C-6 of a third inverter phase leg circuit 21-C provide series connected voltage outputs 22C-1 through 22C-6 between the third winding C of the motor 30 and the neutral N. The inverter stages 24 are individually operable according to one or more corresponding switching control signals 28 from the controller 26. The controller 26 provides control signals 28A to the inverter stages 24A-1 through 24A-6 associated with the first motor winding A, and also provides control signals 28B to the inverter stages 24B-1 through 24B-6 and control signals 28C to the inverter stages 24C-1 through 24C-6. The controller 26 also includes a bypass control component or circuit 34 that provides bypass signals 35 to selectively bypass (i.e., short circuit) the output 22 of selected inverter stages 24.

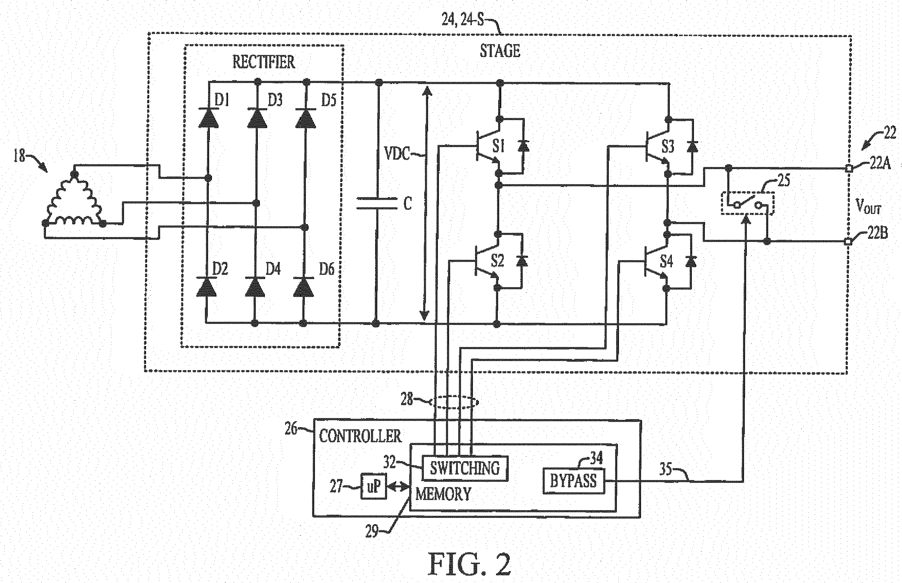

As seen in FIG. 2, the controller 26 includes a processor, such as a microprocessor 27 and an electronic memory 29 that includes or stores data and program instructions executed by the processor 27 to implement a switching control component 32 in a bypass control component 34. As detailed further below, the processor 27 operates according to the program instructions in the memory 29 to provide bypass signals 35 to selectively bypass a group or selected set of M inverter stages 24 that are connected to secondaries 18 at M different phase relationships in order to control harmonic distortion in the current of the transformer primary 16.

FIG. 2 illustrates an example H-Bridge inverter stage 24 having onboard rectifier diodes D1-D6 forming a three-phase rectifier which receives three-phase AC power from the corresponding transformer secondary 18 and provides DC power across a DC capacitor C as an input to an H-Bridge inverter formed by four switching devices S1-S4 configured in an "H" bridge circuit. Although the illustrated inverter stages 24 each include rectifier circuitry driven by an AC input from the corresponding transformer secondary 18, any suitable form of a DC input can be provided to the inverter stages 24 in accordance with the present disclosure, and the inverter stages 24 may, but need not, include onboard rectification circuitry. In addition, any suitable switching circuit configuration can be used in the individual stages 24 having at least two switching devices S configured to selectively provide voltage at the stage output 22 of at least two distinct levels. Moreover, any suitable type of switching devices S may be used in the inverter stages 24, including without limitation semiconductor-based switches such as insulated gate bipolar transistors (IGBTs), silicon controlled rectifiers (SCRs), gate turn-off thyristors (GTOs), integrated gate commutated thyristors (IGCTs), etc.

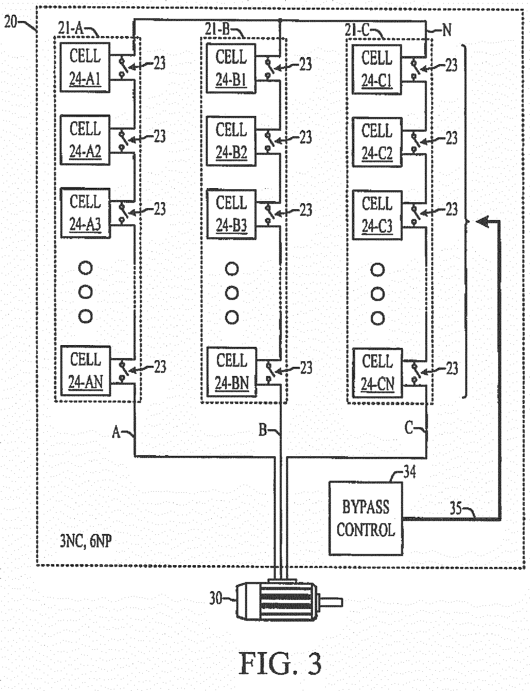

The H-Bridge circuit in FIG. 2 allows selective switching control signal generation by the controller 26 to provide at least two distinct voltage levels at the output 22 in a controlled fashion. For instance, a positive voltage is provided at the output terminals 22A and 22B of a positive DC level substantially equal to the DC bus voltage VDC across the capacitor C (+VDC) when the switching devices S1 and S4 are turned on (conductive) while the other devices S2 and S3 are off (nonconductive). Turning switches S2 and S3 on while S1 and S4 are off results in a negative voltage (-VDC) being applied at the output 22. With switches S1 and S3 turned on and with S2 and S4 off, or vice versa, the output voltage of the stage 24 is zero V. Accordingly, the exemplary H-Bridge inverter stage 24 advantageously allows selection of three different output voltages, and the cascaded configuration of six such stages (e.g., FIGs. 1 and 3) allows selective switching control signal generation by the controller 26 to implement 13 different voltage levels for application to the corresponding motor phase. It is noted that other possible switching circuitry may be used to implement a 2, 3, or K-level selectable output for individual stages 24, where K is an integer greater than 1. In other examples, and on-board or external bypass switch circuit 25 is provided to selectively short-circuit the output terminal 22A and 22B of the stage 24 according to a control signal 35 provided by the bypass control component or circuit 34.

The controller 26 provides individual switching control signals 28 to each of the switching devices S1-S4 in the illustrated example, although certain of the switching control signals may be combined or shared in some embodiments. For instance, a single control signal 28 may be provided to the switching devices S1 and S2, with another shared control signal 28 being used to actuate the switches S3 and S4. The controller may also generate signals for devices S1 and S3 only, while complementary signals for devices S2 and S4 are generated by the gating unit of the device gate drivers (not shown in FIG. 2). The controller 26 generates the switching control signals 28 using any suitable pulse width modulation technique, such as comparison of one or more carrier waveform signals or values associated with each given inverter stage 24 with a reference signal or value. In addition, the controller 26 can implement any suitable closed loop feedback control in order to operate the motor 30 or other driven load, for example, to implement speed and/or torque control by changing a modulation index to set the pulse width modulation on time or off-time duration in each of a plurality of switching control cycles. In particular, the modulation index determines the amplitude or level of the AC voltage is applied to the motor leads A, B and C through switched operation of the series-connected inverter stages 24 in each of the phase leg circuits 21.

During bypass operation, moreover, the controller 26 implements the switching control component 32 in order to generate the switching control signals 28 for the remaining cells by adapting the modulation index to accommodate driving the load 30 using a reduced number of inverter stages 24 in each phase leg circuit 21 (e.g., using N-1 inverter stages 24) while the outputs 22 of one or more inverter stages 24 from each of the inverter legs 21 is bypassed (i.e., short-circuited).

When fault happens in certain power cell, the faulty power call will be bypassed by the local power cell controller (not shown in FIG. 2) or by the bypass control block 34 in the central controller 26. The central controller 26 will then selectively bypass m-1 other cells, one per phase, according to the table disclosed in this disclosure to achieve the best harmonic performance.

FIG. 2 shows that the control signals are directly sent to be power cell components for illustration only. The control signals from the central controller 26 can also be sent to the power cell local controller (not shown in FIG. 2) first, and then dispatched to the power cell components by the local controller.

Referring also to FIG. 3, disclosed examples generally include an integer number N cells or inverter stages 24 in each phase leg circuit 21, and a variety of different multiphase implementations are possible including an integer number M phase leg circuits 21. FIG. 3 illustrates a three-phase implementation having N stages 24 in each phase leg circuit 21-A, 21-B and 21-C. As discussed above, moreover, each cell or stage 24 can have an internal bypass switch circuit 25 (e.g., as shown in FIG. 2) or the output of each stage 24 can be connected to an external bypass switch 23 as shown in FIG. 3. In either case, the controller processor 27 implements the bypass control component to selectively provide bypass signals 35 to operate the internal or external bypass switches 25 or 23. The switches 25 in FIGs. 1 and 2, and the switches 23 in FIG. 3, are shown single-pole single-throw type for illustration only. They can be single-pole multi-throw or multi-pole multi-throw mechanical switches. The bypass switches 25 and 23 can also be electronic switches formed by combinations of diodes, IGBTs and SCRs can also be used for this purpose. FIG. 3 illustrates a general case in which each phase leg circuit 21 includes an integer number N cells or stages (e.g., 24-A1 through 24-AN, 24-B1 through 24-BN, and 24-C1 through 24-CN), in which the lowermost (Nth) stage is connected to the corresponding motor phase lead A, B or C.

The control circuit 26 operates in a first mode (normal) or in a second mode (bypass). In the first mode, the processor 27 of the controller 26 implements the program instructions in the memory 29 associated with the switching component 32 in order to provide the switching control signals 28 to the inverter stages 24 in order to create multiphase output voltage signals at the motor leads A, B and C to drive the motor load 30. In the second mode, the processor 27 executes program instructions associated with the bypass component 34 in order to provide select bypass signals 35 in response to a suspected inverter stage fault to bypass the stage outputs 22 of a selected set of M of the inverter stages 24. In particular, the control processor 27 selects the set of inverter stages 24 for bypassing to include a single inverter stage 24 from each of the inverter phase leg circuits 21 such that the selected set of inverter stages 24 are connected to secondaries 18 of a phase shift transformer 14 at M different phase relationships. This selection advantageously mitigates severe phase loading imbalances to control harmonic distortion in the source current of the transformer primary 16. In certain implementations, the processor 27 also operates in the second (bypass) mode according to the program instructions 32 to provide the switching control signals 28 to at least some of the inverter stages 24 to cause the multilevel inverter 20 to provide phase voltage signals at the inverter phase output nodes A, B, C to drive the load 30 while the selected set of stages 24 are bypassed. In certain examples, the processor 27 operates in response to bypassing of the selected set of M of the inverter stages 24 to provide the switching control signals 28 to the remaining N-1 non-bypassed inverter stages 24 of each of the inverter phase leg circuits 21 to cause the multilevel inverter 20 to provide phase voltage signals at the inverter phase output nodes A, B, C to drive a load 30 in the second mode, for example, using an adjusted modulation index.

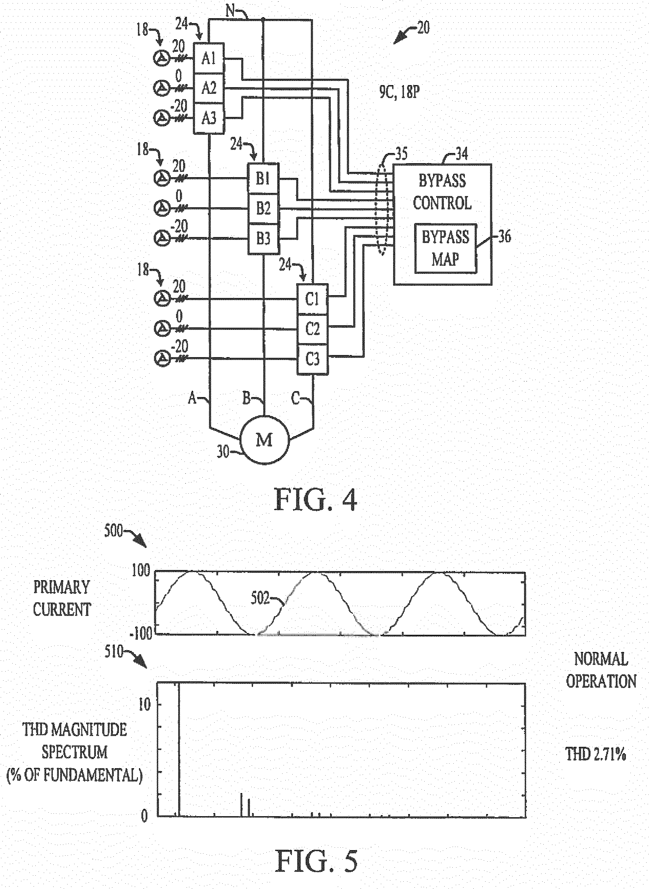

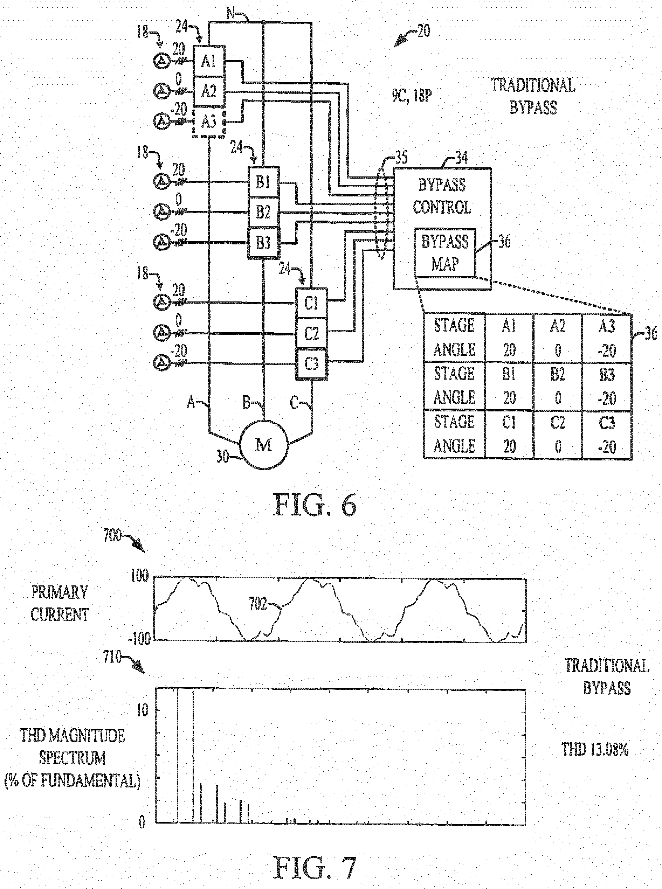

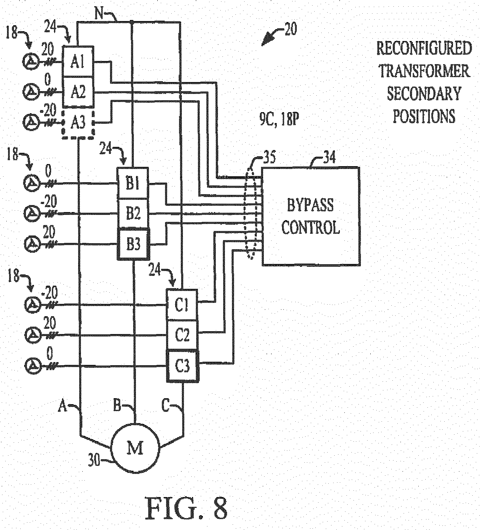

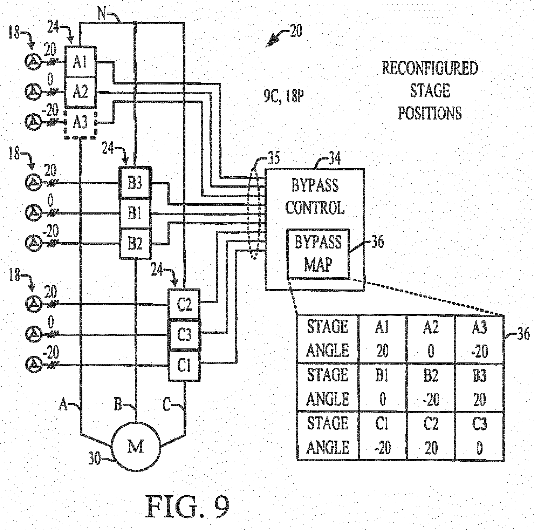

Referring now to FIGs. 4-11, the THD control and bypass control concepts of the present disclosure can be implemented by the controller 26 intelligently selecting sets of inverter stages 24 to be bypassed in response to detection of a suspected stage fault through programming instructions in the bypass control component 34 executed by the control processor 27 according to a bypass map 36 (e.g., FIGs. 4 and 6). In other examples (e.g., FIG. 8 and 9), the transformer secondary connections to the inverter stages 24 are modified by re-cabling and/or installation of a new phase shift transformer 14. FIGs. 4-11 illustrate the concepts in the context of a three-phase multilevel inverter configuration 20 that includes N = 3 inverter stages 24 in each phase leg circuit to implement a nine cell, 18 pulse (9C, 18P) system, including simulated comparative results regarding harmonic distortion performance of the phase shift transformer primary current. The described concepts can be applied to multilevel inverters 20 having any number M phase legs that individually include any integer number N inverter stages 24.

FIG. 4 illustrates a traditional interconnection of phase shifted secondary circuits 18 with the inverter modules 24, in which the first inverter stages A1, B1 and C1 are powered by secondary windings 18 at a phase angle of α+20°, the (N-1)th inverter stages A2, B2 and C2 are connected to secondaries 18 at α+0°, and the Nth inverter stages A3, B3 and C3 are connected to secondaries 18 at α-20°, where α is an arbitrary angle and equals zero for most designs. The various angles shown in the drawings are likewise offsets from an arbitrary angle α, although not designated in the drawing figures. FIG. 5 shows a graph 500 including a primary current curve 502, and a graph 510 showing the THD magnitude spectrum as a percentage of the fundamental for normal operation of the system of FIG. 4. In this example, a THD of 2.71 % is achieved during normal operation.

FIG. 6 illustrates the same circuit configuration in which a fault is suspected in the inverter stage A3, indicated in dashed line in the figure. To illustrate the harmonic distortion problems of conventional bypassed techniques, in this example, the bypass map 36 simply bypasses the suspected inverter stage A3 along with the corresponding lowermost inverter stages B3 and C3, illustrated as thicker lines in FIG. 6. FIG. 7 shows graphs 700 and 710 respectively illustrating the resulting primary current curve 702 and the resulting THD magnitude spectrum. In this example, the primary current THD increases significantly to 13.08% due to the lack of balance in the phase shifted secondaries 18 of the transformer. The inventors have appreciated that this is due to the selection of the connected inverter stages A3, B3 and C3 for concurrent bypassing.

FIG. 8 shows a different interconnection pattern of the secondaries 18 to the inverter stages 24, in which the physical positioning of the inverter stages 24 remains the same as in FIGs. 4 and 6. In one implementation, this can be accomplished using a different transformer construction 14. In this example, selection by the bypass control component 34 of the selected set of inverter stages A3, B3 and C3 for concurrent bypassing in response to identification of a suspected fault in the inverter stage A3 leads to bypassing of stages connected respectively to an α-20° secondary (A3), an α+20° secondary (B3), and an α+0° secondary (C3). In one example, the inverter stages 24 form an integer number N groups, with each group including a single inverter stage 24 from each of the inverter phase leg circuits 21, where the N groups include a first group having M first inverter stages (e.g., A1, B1, C1) connected between the reference node N and a second group, an Nth group having M final inverter stages (e.g., AN, BN, CN) connected between an (N-1)th group and the corresponding inverter phase output node A, B, C, and N-2 intermediate groups individually having M final inverter stages (Ai, Bi, Ci) connected between a preceding group and a succeeding group. In certain example, the controller 26 determines the selected set of M of the inverter stages 24 as a selected one of the groups that includes an inverter stage 24 associated with the suspected inverter stage fault.

FIG. 9 illustrates a reconfigured system 20 in which the inverter stages 24 of the second and third phase leg circuits are reconfigured while using the same transformer secondary configuration as in the example of FIG. 6. In this case, again for the hypothetical example of a detected or suspected fault in the inverter stage A3, a selected set of inverter stages A3, B3 and C3 are bypassed, and the bypassed stages A3, B3 and C3 are respectively connected to secondaries 18 at α-20°, α+20° and α+0°, respectively.

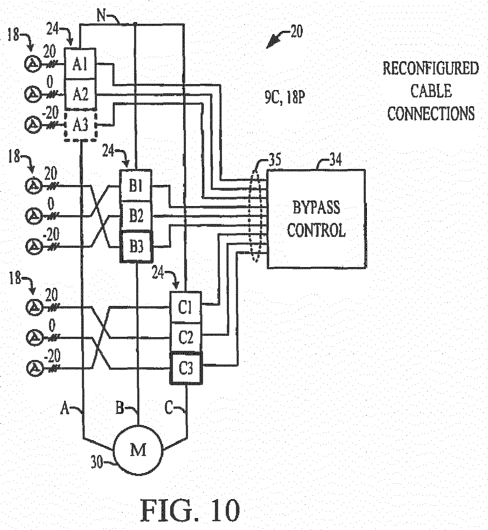

FIG. 10 illustrates yet another implementation in which the cabling connection of the transformer secondaries 18 to the inverter stages 24 is modified for the inverter stages 24 of the second and third phase leg circuits. For the case where a fault is suspected in the inverter stage A3, the controller 26 again selects A3, B3 and C3 for bypassing. In this example, the reconfiguration of the cable connections from the secondaries 18 to the inverter stages 24 again yields bypassing of inverter stages 24 that are respectively at - α+20°, α-24° and α+0° phase relationship to one another.

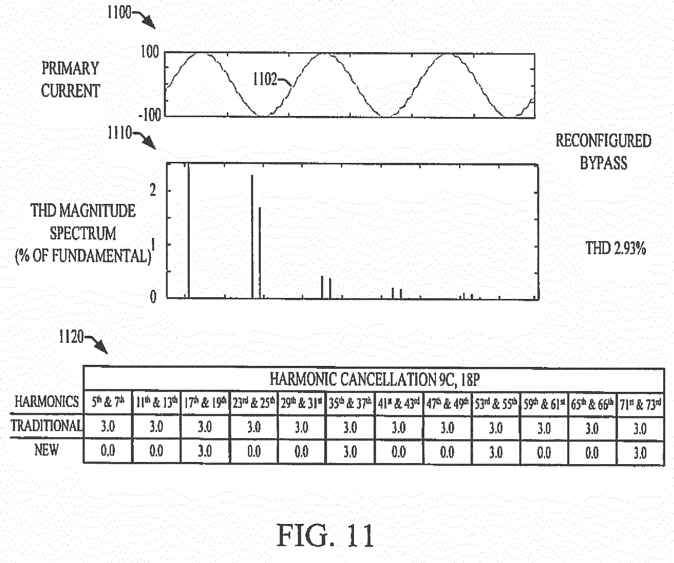

FIG. 11 illustrates significantly improved total harmonic distortion performance during reconfigured bypassing in the systems of FIGs. 8-10 according to the concepts of the present disclosure. A graph 1100 shows a primary current curve 1102 for the reconfigured bypass implementations, and a graph 1110 shows the corresponding THD magnitude spectrum as a percentage of the fundamental. These implementations yield a THD of 2.93% during the modified bypass operation, which is a significant improvement over the 13.08% THD resulting from conventional bypassing as discussed above in connection with FIGs. 6 and 7. FIG. 11 also provides a table 1120 showing the harmonic cancellation results for the 9C, 18P examples of FIGs. 8-10, including comparative data for the traditional bypass approach (e.g., 3.04 all the enumerated harmonic components), and the reconfigured bypassing approaches of FIGs. 8-10 (labeled "NEW" in the table 1120). The harmonic magnitude values in 1120 and other illustrated harmonic cancellation result tables are normalized to the spectrum of a single secondary winding current referred to the primary side. As seen in the table 1120, the reconfiguration through intelligent bypass group or set selection by the controller 26 provides similar harmonic cancellation results for the 17^{th}, 19^{th}, 35^{th}, 37^{th}, 53^{rd}, 55^{th}, 71^{st} and 73^{rd} harmonics, but the other computed harmonic components are essentially reduced to 0.0. Accordingly, the THD of 2.93% is achieved through operation of the controller 26 to provide significant harmonic reduction during bypass operation compared with conventional bypassing approaches. Although the illustrated examples show bypassing of the Nth inverter stages 24 (e.g., A3, B3 and C3), similar results are provided for bypassing of other selected sets based on inclusion of an inverter stage 24 that is suspected of being faulted (e.g., bypassing A1, B1 and C1, etc.).

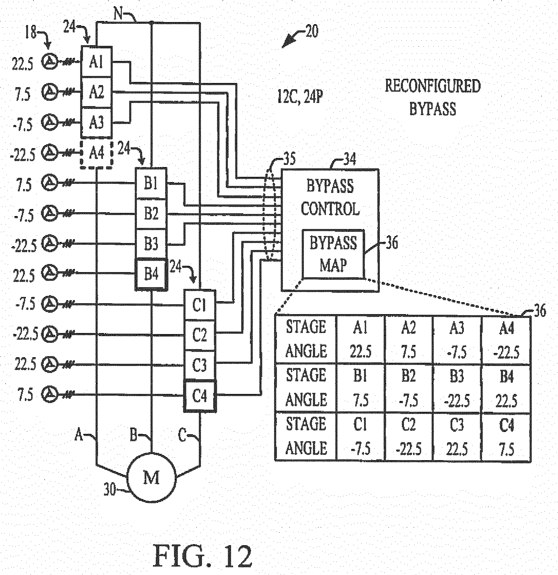

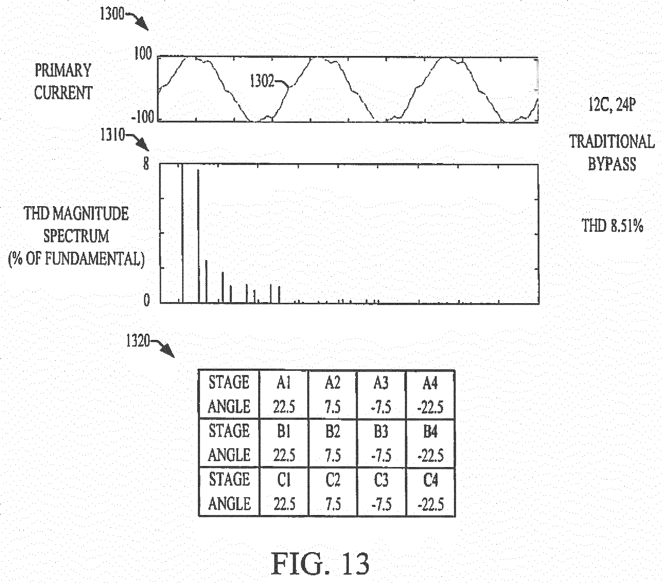

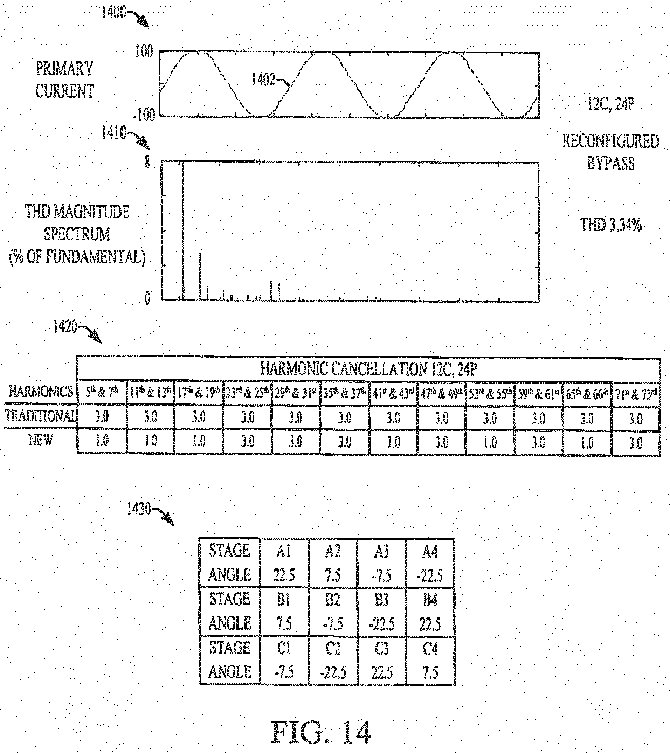

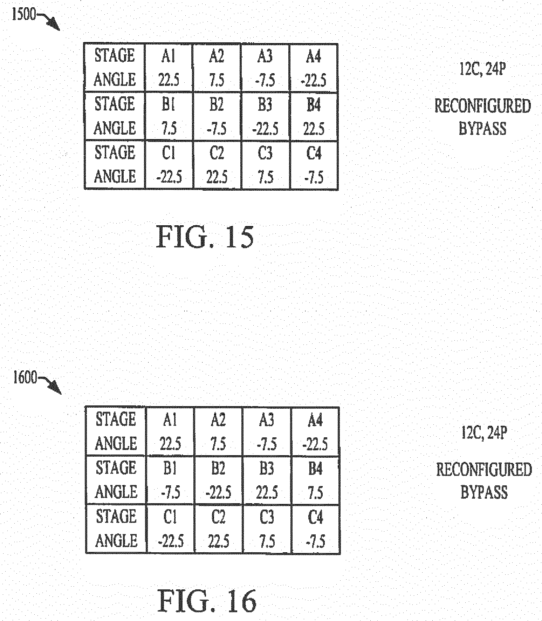

FIGs. 12-16 illustrate application of the concepts of the present disclosure to a 12C, 24P three-phase implementation in which each of the phase leg circuits includes N = 4 inverter stages 24 (A1-A4, B1-B4 and C1-C4) as shown in FIG. 12. Again using the illustrated example in which the final stage 24 of the first phase leg circuit (e.g., A4) is suspected of being faulted, FIG. 12 shows concurrent bypassing of the Nth stages A4, B4 and C4 by operation of the bypass control component 34 (e.g., program instructions executed by the control processor 27). As shown in FIG. 12, the illustrated example uses a reconfigured transformer with secondary connections to the bypassed inverter stages at α-22.5° (A4), α+22.5° (B4) and α+7.5° (C4). This intelligent distribution of the phase relationships among the bypassed selected set of inverter cells 24 advantageously mitigates the extreme phase unbalance compared with conventional bypassing techniques. FIG. 13 shows a graph 1300 with a primary current curve 1302 using conventional or traditional bypassing in a 12C, 24P and a graph 1310 that shows the corresponding THD magnitude spectrum. FIG. 13 also shows a corresponding bypass map 1320 for the traditional case in which the example bypass set A4, B4 and C4 are all at α-22.5°. This case yields a THD of 8.51% during bypass operation. FIG. 14 illustrates results for use of the presently disclosed techniques in the 12C, 24P configuration of FIG. 12 using reconfigured bypass in which the example bypassed selected set of inverter stages 24 (e.g., A4, B4 and C4) are respectively at α-22.5°, α+22.5° and α+7.5° as shown in the example bypass map table 1430. FIG. 14 also shows a graph 1400 including a transformer primary current curve 1402 for this reconfigured bypass operation, as well as a corresponding THD magnitude spectrum graph 1410. A harmonic cancellation table 1420 illustrates the harmonic cancellation components for various modeled harmonics comparing the traditional bypassing approach to the new reconfigured bypass technique which yields a THD of 3.34% compared to the traditional case THD of 8.51%. FIGs. 15 and 16 respectively illustrate alternate reconfiguration bypass maps 1500 and 1600 that can be used for the example 12C, 24P configuration of FIG. 12.

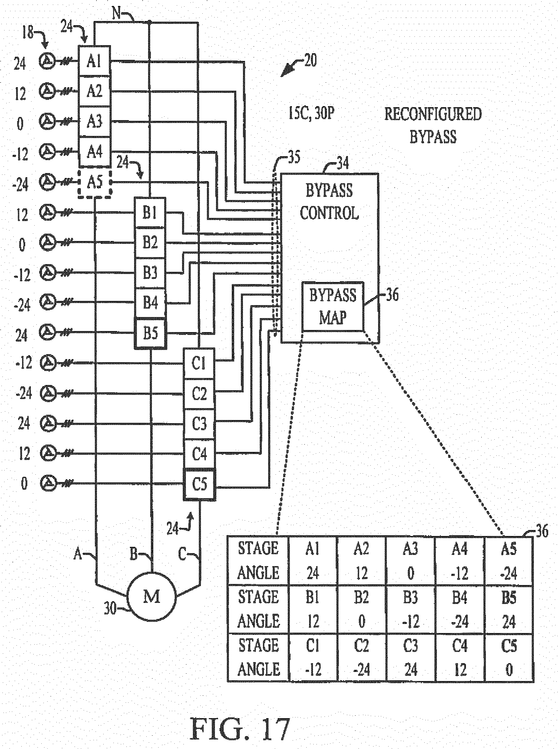

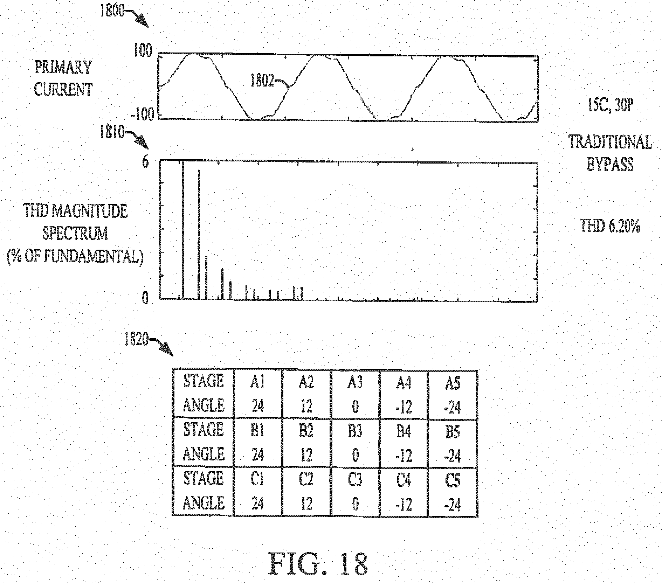

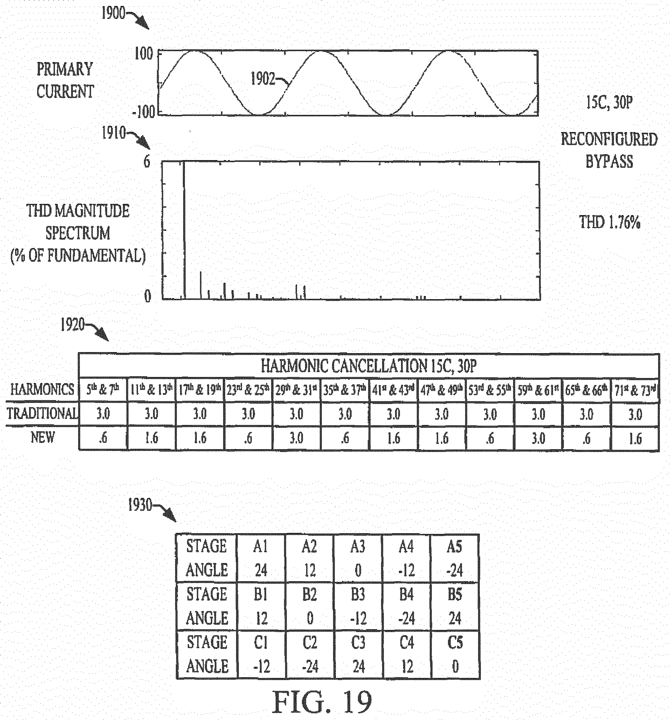

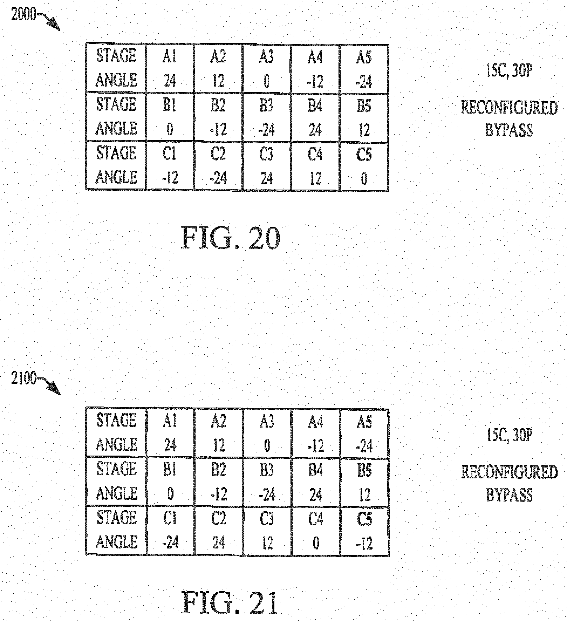

FIGs. 17-21 illustrate the reconfigured bypass concepts of the present disclosure to a 15C, 30P three-phase system. FIG. 17 shows an example system in which each of the phase leg circuits includes five inverter stages 24 (e.g., A1-A5, B1-B5 and C1-C5) for the example situation in which A5 is suspected of having a fault, and the controller 26 selects the inverter stages A5, B5 and C5 for contemporaneous bypassing. As seen in this configuration and the corresponding bypass map 36, the example selected set of bypassed inverter stages 24 are respectively at α-24°, α+24° and α+0°. As in the other described examples, the other selectable sets (e.g., {A1, B1, C1}, or {A2, B2, C2}, or {A3, B3, C3}) similarly provide for contemporaneous or concurrent bypassing of a selected set of inverter stages 24 that are at M different phase relationships to one another in order to control harmonic distortion in the current of the transformer primary 16. FIG. 18 includes a graph 1800 with a primary current curve 1802 for the 15C, 30P configuration using traditional bypass, along with a graph 1810 showing the corresponding THD magnitude spectrum, and a bypass mapping table 1824 the traditional case which yields a THD of 6.2%. FIG. 19 illustrates operation of the reconfigured bypass concepts for the 15C, 30P implementation of FIG. 17 which yields a significantly reduced THD of 1.76%. The graph 1900 in FIG. 19 shows the corresponding primary current curve 1902 having significantly reduced harmonics compared to the traditional bypass case of FIG. 18. A graph 1910 in FIG. 19 shows the corresponding THD magnitude spectrum, and a harmonic cancellation table 1920 shows the comparative harmonic cancellation results for the indicated harmonic components using the reconfigured bypass map shown in the table 1930 of FIG. 19. FIGs. 20 and 21 illustrate other non-limiting example reconfigured bypass maps 2000 and 2100, respectively, that can be used in a 15C, 30P implementation.

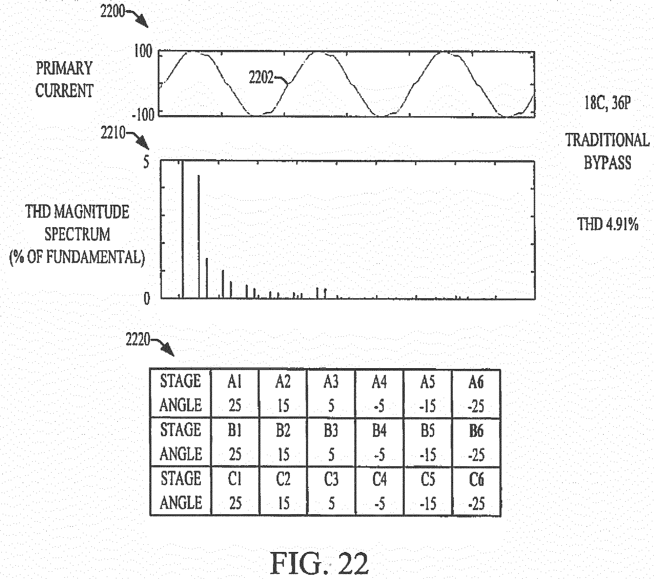

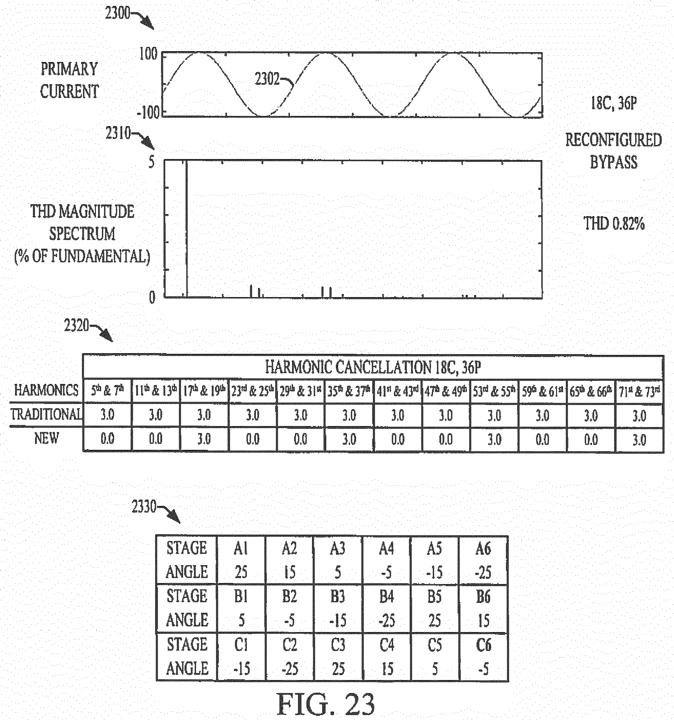

FIGs. 22 and 23 show use of the described reconfigured bypass concepts to an 18C, 36P system having six inverter stages 24 in each of the phase inverter legs. For the example case in which the final stages A6, B6 and C6 are concurrently bypassed using the traditional configuration, FIG. 22 shows a graph 2200 including a corresponding primary current curve 2202 during bypass operation, along with a graph 2210 illustrating the corresponding THD magnitude spectrum, and a bypass mapping table 2220, and the resulting THD is 4.91%. As seen in FIG. 23, use of the reconfigured bypass set selection and corresponding phase relationship shown in a table 2330, the example selected set of bypassed inverter stages A6, B6 and C6 are respectively at α-25°, α+15° and α-5° relative to one another, which reduces the THD to 0.82%. A graph 2300 illustrates a corresponding primary current curve 2302, and a graph 2310 shows the corresponding THD magnitude spectrum, with a harmonic cancellation table 2320 showing the comparative results for the enumerated harmonic components.

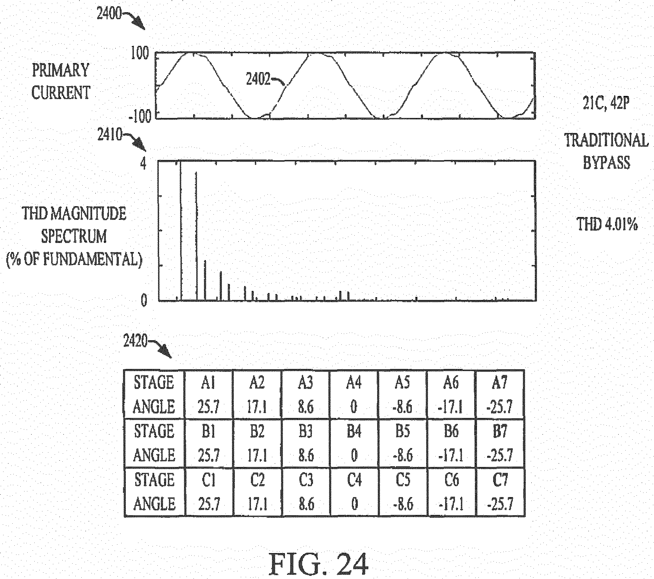

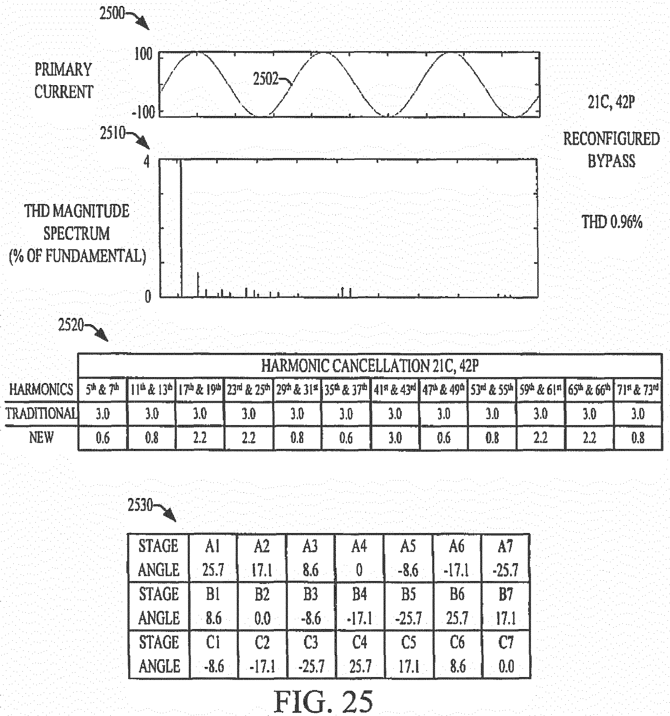

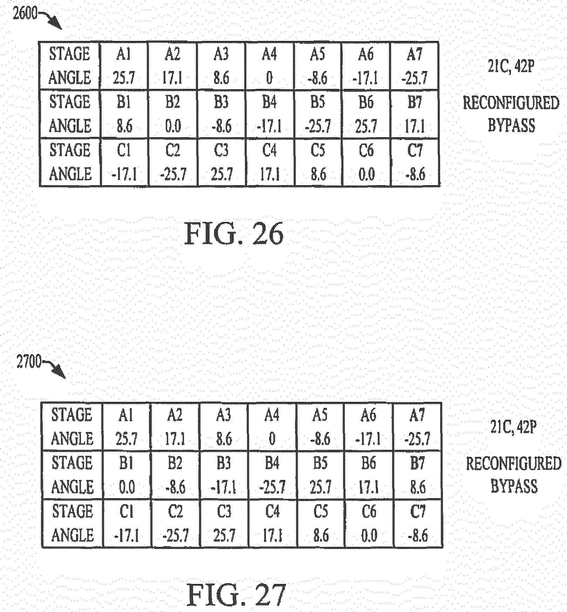

FIGs. 24-27 illustrate a 21C, 42P example in which each inverter phase leg circuit includes seven inverter stages 24 (e.g., A1-A7, B1-B7 and C1-C7 for a three phase system). FIG. 24 illustrates the traditional bypass operation with a graph 2400 showing the corresponding primary current curve 2402 with a THD of 4.01%. The graph 2410 shows the corresponding THD magnitude spectrum and a table 2420 shows the corresponding traditional bypass mapping table where an example set of bypassed inverter stages A7, B7 and C7 are all at a phase angle of α-25.7°. FIG. 25 shows an example reconfigured bypass implementation for such a 21C, 42P system that yields a THD of only 0.96%. A graph 2500 and FIG. 25 shows a primary current curve 2502, and a graph 2510 shows the corresponding THD magnitude spectrum. This case uses a reconfigured bypass map shown in table 2530 in FIG. 25, and a harmonic cancellation results table 2520 shows the comparative results for an enumerated set of harmonic components. FIGs. 26 and 27 show two additional non-limiting example reconfigured bypass maps 2600 and 2700, respectively, which can be used in other 21C, 42P implementations.

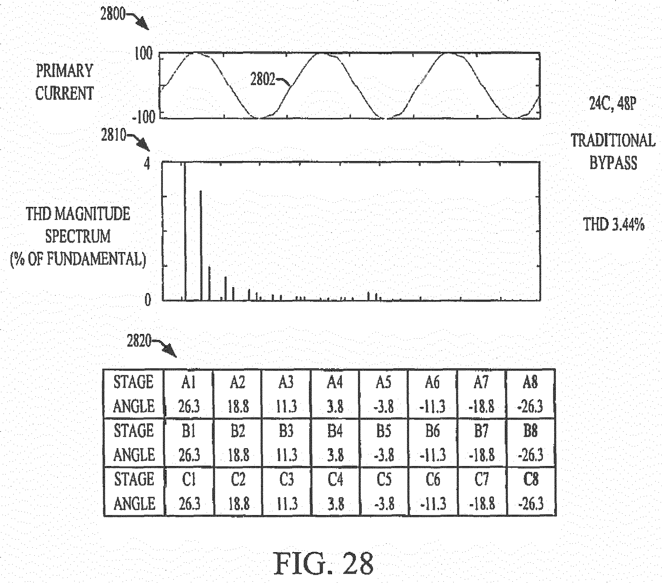

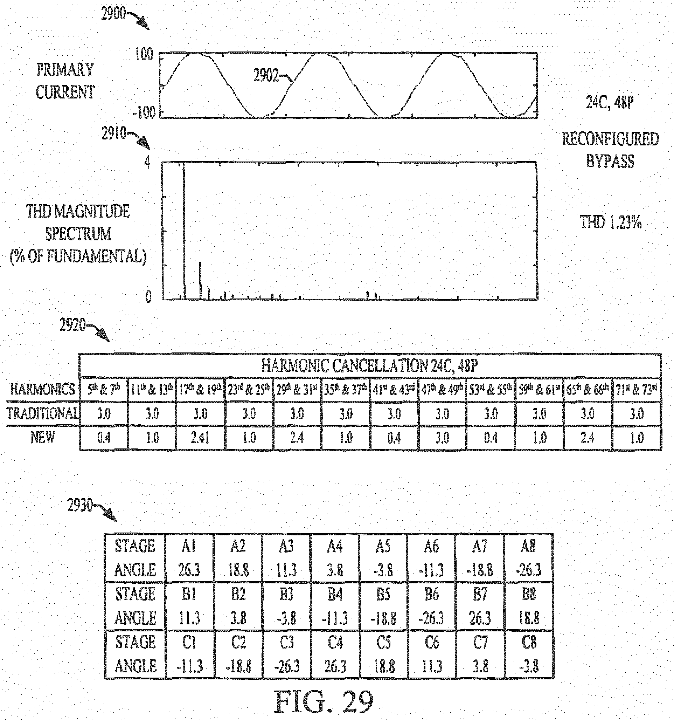

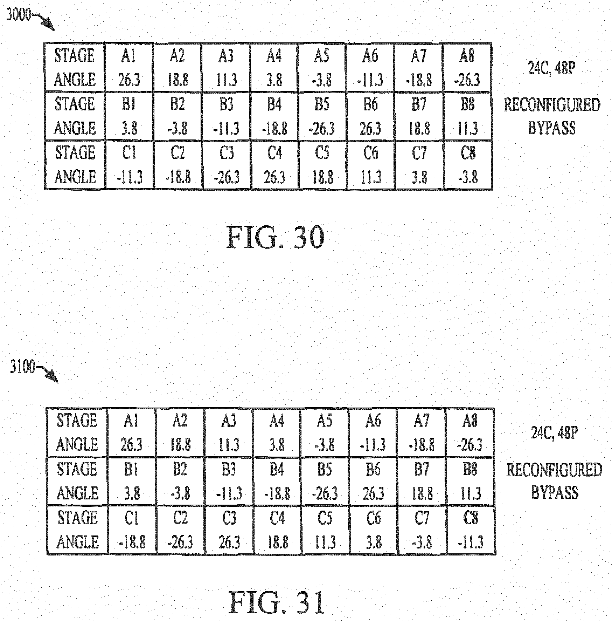

FIGs. 28-31 illustrate a 24C, 48P example in which each inverter phase leg circuit includes eight inverter stages 24 (e.g., A1-A8, B1-B8 and C1-C8), in which FIG. 28 illustrates a graph 2800 showing the corresponding primary current curve 2802 with a THD of 3.44 % for traditional bypass operation, a graph 2810 shows the corresponding THD magnitude spectrum, and a table 2820 shows the corresponding traditional bypass mapping table in which inverter stages A8, B8 and C8 are all at a phase angle of α-26.3°. FIG. 29 shows use of the disclosed reconfigured bypass techniques for a 24C, 48P system that yields a THD of only 1.23%. A graph 2900 and FIG. 29 shows a primary current curve 2902, and a graph 2910 shows the corresponding THD magnitude spectrum. This case uses a reconfigured bypass map shown in table 2930, and a harmonic cancellation results table 2920 shows the comparative results for an enumerated set of harmonic components. FIGs. 30 and 31 respectively show two additional non-limiting example reconfigured bypass maps 3000 and 3100 which can be used in a 24C, 48P implementation.

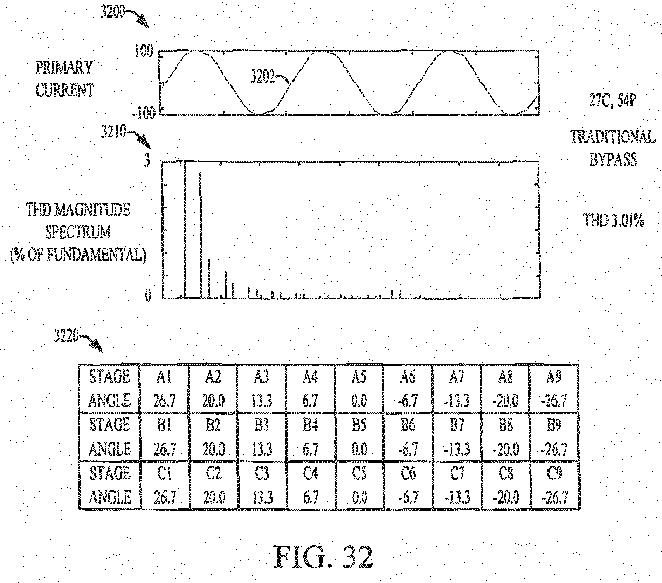

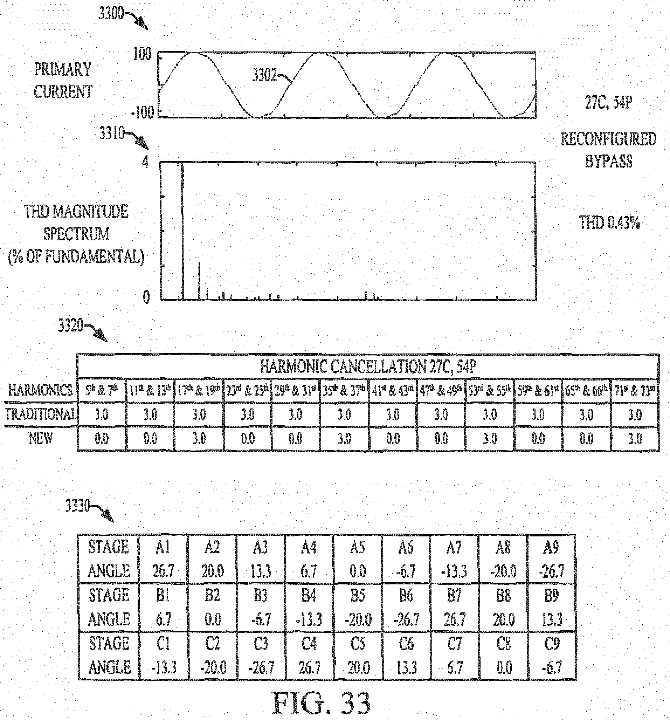

A 27C, 54P example is illustrated in FIGs. 32 and 33, where the inverter phase leg circuits individually include nine inverter stages 24 (e.g., A1-A9, B1-B9 and C1-C9). FIG. 32 shows a graph 3200 with a primary current curve 3202, along with a THD magnitude spectrum graph 3210 and a traditional bypass mapping table 3220 that yields a THD of 3.01% during bypass operation. Using the presently disclosed techniques, FIG. 33 illustrates significantly improved THD of only 0.43% for a 27C, 54P reconfigured bypass implementation. A graph 3300 in FIG. 33 includes a primary current curve 3302, and a graph 3310 shows the corresponding THD magnitude spectrum as a percentage of the fundamental. This example uses an example mapping table 3330 in which an example selected set of bypassed inverter stages A9, B9 and C9 are respectively at phase angles of α-26.7°, α+13.3° and α-6.7°. As with the other disclosed non-limiting examples, similar results can be obtained using a different selected set of bypassed cells (e.g., A4 (α+6.7°), B4 (α-13.3°) and C4 (α+26.7°), etc.). The illustrated table 3320 in FIG. 33 shows the comparative harmonic cancellation results for a set of enumerated harmonic components.

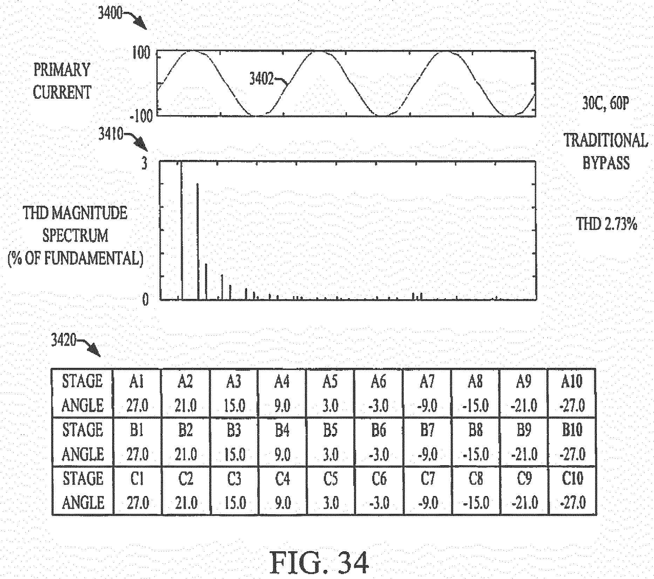

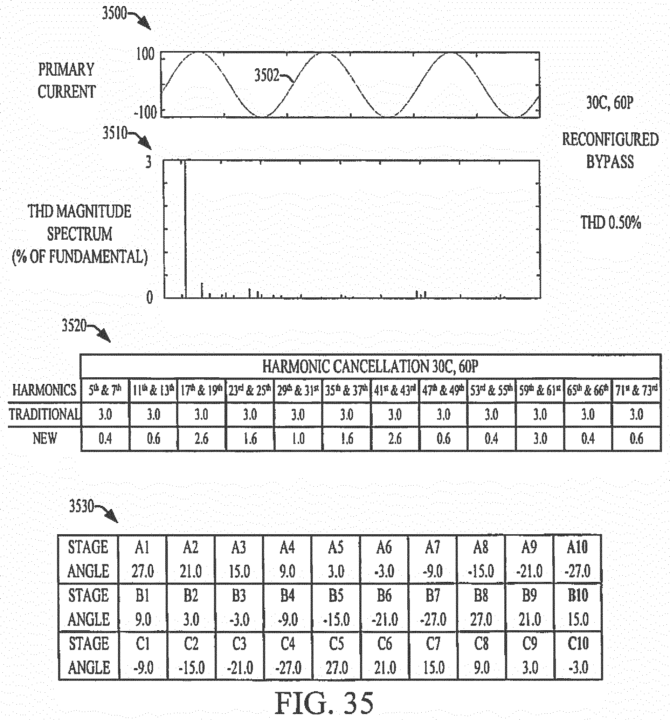

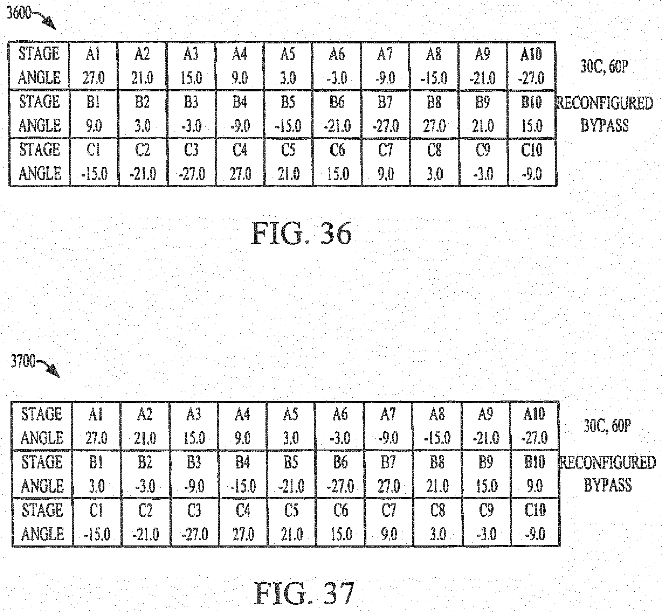

FIGs. 34-37 illustrate the advantages of the presently disclosed techniques and apparatus for a 30C, 60P system (e.g., a three-phase example including inverter stages A1-A10, B1-B10 and C1-C10). Using traditional cell bypass techniques as shown in a bypass table 3420 in FIG. 34, a THD of 2.73% is achieved for the transformer primary current, shown as curve 3402 in a graph 3400, with a graph 3410 showing the corresponding THD magnitude spectrum. FIG. 35 shows significant primary current THD reduction using the presently disclosed concepts for reconfigured bypass operation according to a mapping table 3530 in which an example selected set of bypassed inverter stages A10, B10, C10 are respectively at phase angles of my needs α+27°, α+15° and α-3°. The corresponding primary current is shown as curve 3502 in a graph 3500, and a graph 3510 shows the corresponding THD magnitude spectrum as a percentage of the fundamental. This example implementation achieves a bypass mode THD of only 0.50%, with a table 3520 showing the harmonic cancellation values for a specified set of indicated harmonic components. FIGs. 36 and 37 respectively show two additional non-limiting example reconfigured bypass maps 3600 and 3700 which can be used in a 30C, 60P system.

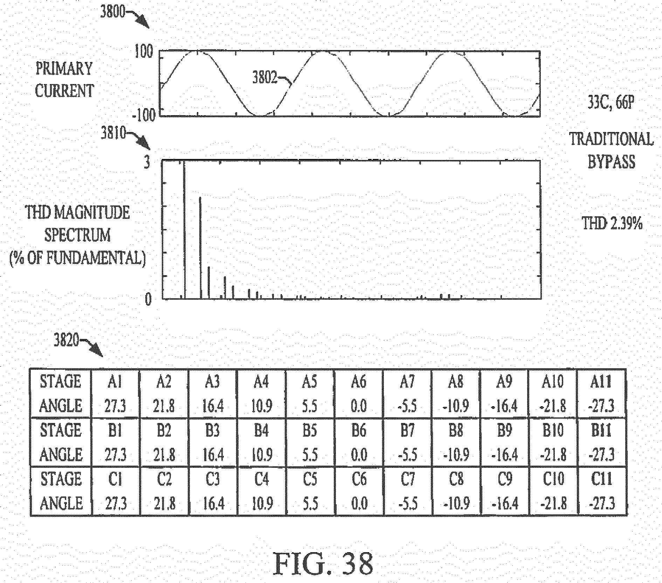

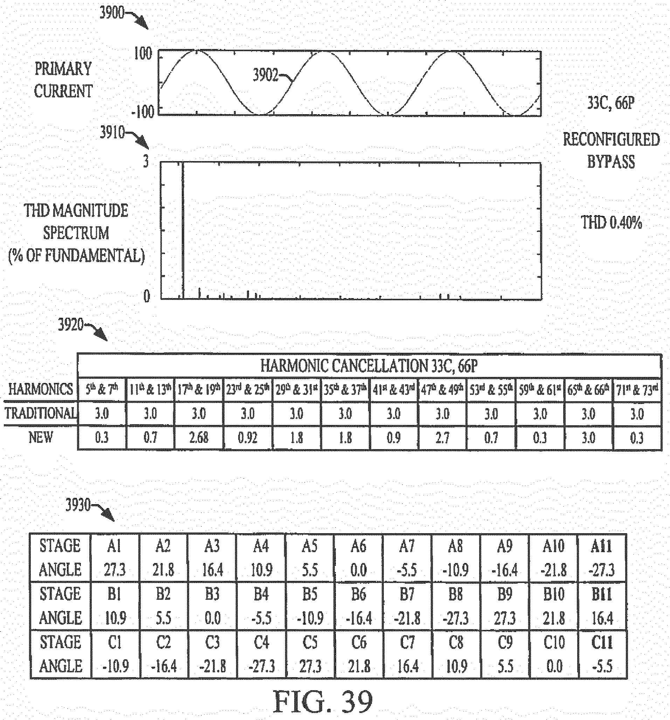

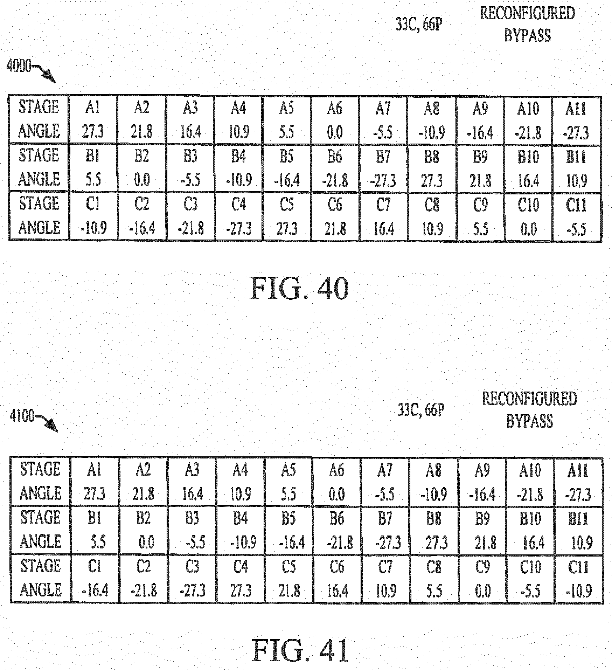

A 33C, 66P example is illustrated in FIGs. 38-41 for a three phase multilevel inverter system 20 having 11 inverter stages 24 in each inverter phase leg circuit (e.g., A1-A11, B1-B11 and C1-C11), for the example case in which the final set of inverter stages A11, B11 and C11 are bypassed. FIG. 38 illustrates harmonic performance in such a system using traditional bypass techniques in which the bypassed cells are all connected to transformer secondaries at α-27.3° phase angles, in which a graph 3800 shows a corresponding primary current curve 3802, a graph 3810 shows the corresponding THD magnitude spectrum, and a table 3820 shows the corresponding bypass map for a resulting THD of 2.39%. FIG. 39 shows a reconfigured bypass implementation according to a table 3930 in which the bypassed inverter stages A11, B11 and C11 are connected to secondaries at corresponding angles of α-27.3°, α+16.4° and α-5.5° (the table 3930 that similar phase distribution advantages are achieved for any selected set Ai, Bi and Ci of inverter stages 24 chosen by the controller 26 for bypassing). The illustrated example achieves a THD of 0.40%, with a graph 3900 showing the corresponding primary current curve 3902, a graph 3910 showing the corresponding THD magnitude spectrum, and a comparative harmonic cancellation table 3920 showing the resulting harmonics at certain indicated harmonic components for the traditional and new (e.g., reconfigured) bypassing approaches. Two additional non-limiting example reconfigured bypass maps 4040 100 are respectively shown in FIGs. 40 and 41 four alternate 33C, 66P implementations.

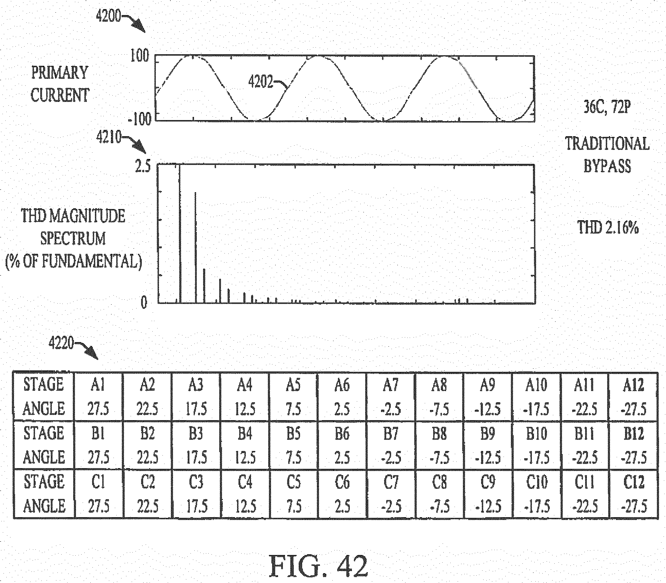

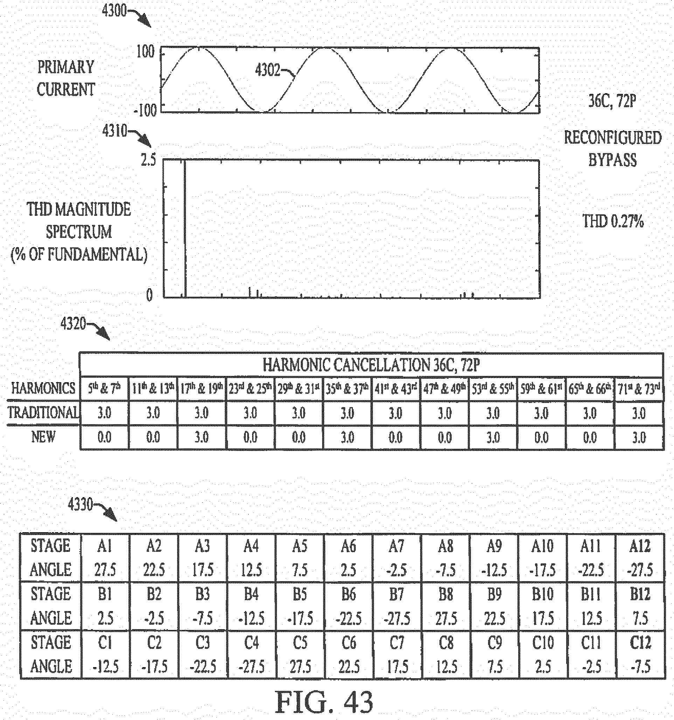

FIGs. 42 and 43 illustrate a 36C, 72P example for a three-phase system including 12 inverter stages 24 for each phase leg circuit. In this example, the final set of inverter stages A12, B12 and C12 are chosen for bypassing based on a suspected fault in the stage A12. A graph 4200 in FIG. 42 shows a primary current curve 4202 and a graph 4210 shows a corresponding THD magnitude spectrum for such a system using traditional bypass shown in table 4220, resulting in a THD of 2.16%. Using the apparatus and techniques of the present disclosure, reconfigured bypass operation is illustrated in FIG. 43, to achieve a significant reduction in THD down to 0.27%. In this example, a table 4330 shows one possible bypass mapping in which the example bypassed stage is A12, B 12 and C12 are respectively connected to transformer secondaries at angles of α-27.5°, α+7.5° and α-7.5°. A graph 4300 shows the resulting primary current curve 4302, graph 4310 shows the corresponding THD magnitude spectrum as a percentage of the fundamental, and a harmonic cancellation table 4320 shows the comparative harmonics at a set of harmonic components for the traditional and new bypass approaches.

Many other possible configurations and reconfigured bypassing examples can be implemented according to the concepts of the present disclosure, wherein the above implementations are merely non-limiting examples. The disclosed apparatus, methods, and computer readable mediums can be employed in a variety of multiphase multilevel inverters using any suitable inverter cell or stage architecture in order to reduce or mitigate bypass mode harmonic distortion.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense. Also, the terms "couple", "couples", or "coupled" are intended to include indirect or direct electrical or mechanical connection or combinations thereof. For example, if a first device couples to or is coupled with a second device, that connection may be through a direct electrical connection, or through an indirect electrical connection via one or more intervening devices and connections.

## Claims

1. A power conversion system, comprising:
a phase shift transformer including a primary to receive power from an AC power source, and an integer number N secondary sets individually including an integer number M secondaries, M being greater than 2, N being greater than 2, the secondaries of each secondary set being at a different phase relationship relative to the other sets;
a multiphase multilevel inverter, comprising M inverter phase leg circuits the individual inverter phase leg circuits including N inverter stages with corresponding stage outputs connected in series between a reference node and a corresponding inverter phase output node to provide a phase voltage signal at the corresponding inverter phase output node, the individual inverter stages including an AC input connected to one of the secondaries of the phase shift transformer, and a plurality of switching circuit operative according to at least one corresponding switching control signal to selectively provide an output voltage having an amplitude of one of at least two discrete levels at the corresponding stage output; and
a controller operative in response to a suspected inverter stage fault to selectively provide bypass signals to concurrently bypass the stage outputs of a selected set of M of the inverter stages including a suspected faulty stage, the selected set of inverter stages including a single inverter stage from each of the inverter phase leg circuits, the selected set of inverter stages being connected to secondaries of the phase shift transformer at M different phase relationships to control harmonic distortion in a current of the transformer primary.

2. The power conversion system of claim 1, wherein the controller is operative in response to bypassing of the selected set of M of the inverter stages to provide the switching control signals to N-1 non-bypassed inverter stages of each of the inverter phase leg circuits to cause the multilevel inverter to provide phase voltage signals at the inverter phase output nodes to drive a load.

3. The power conversion system of claim 2,
wherein the inverter stages form an integer number N groups, each group including a single inverter stage from each of the inverter phase leg circuits, the N groups including a first group having M first inverter stages connected between the reference node and a second group, an Nth group having M final inverter stages connected between an (N-1)th group and the corresponding inverter phase output node, and N-2 intermediate groups individually having M final inverter stages connected between a preceding group and a succeeding group; and
wherein the controller determines the selected set of M of the inverter stages as a selected one of the groups that includes an inverter stage associated with the suspected inverter stage fault.

4. The power conversion system of claim 1,
wherein the inverter stages form an integer number N groups, each group including a single inverter stage from each of the inverter phase leg circuits, the N groups including a first group having M first inverter stages connected between the reference node and a second group, an Nth group having M final inverter stages connected between an (N-1)th group and the corresponding inverter phase output node, and N-2 intermediate groups individually having M final inverter stages connected between a preceding group and a succeeding group; and
wherein the controller determines the selected set of M of the inverter stages as a selected one of the groups that includes an inverter stage associated with the suspected inverter stage fault.

5. The power conversion system of one of claims 1 to 4, wherein the inverter stages are H-bridge stages individually comprising a rectifier circuit and four switching devices coupled between the corresponding rectifier circuit and the corresponding stage output.

6. A controller to operate a multiphase multilevel inverter that includes M inverter phase leg circuits that individually include N inverter stages with corresponding stage outputs connected in series between a reference node and a corresponding inverter phase output node, M being greater than 2, N being greater than 2, the controller comprising:
an electronic memory; and
a processor operative according to program instructions in the electronic memory to provide bypass signals in response to a suspected inverter stage fault to concurrently bypass the stage outputs of a selected set of M of the inverter stages, the selected set of inverter stages including a single inverter stage from each of the inverter phase leg circuits, the selected set of inverter stages being connected to secondaries of a phase shift transformer at M different phase relationships to control harmonic distortion in a current of the transformer primary in response to a suspected inverter stage fault.

7. The controller of claim 6, wherein the processor is further operative according to the program instructions to provide switching control signals to at least some of the inverter stages to cause the multilevel inverter to provide phase voltage signals at the inverter phase output nodes to drive a load.

8. The controller of claim 7, wherein the processor is further operative according to the program instructions, in response to bypassing of the selected set of M of the inverter stages, to provide the switching control signals to the remaining N-1 non-bypassed inverter stages of each of the inverter phase leg circuits to cause the multilevel inverter to provide phase voltage signals at the inverter phase output nodes to drive the load.

9. The controller of claim 7 or 8,
wherein the inverter stages of the a multiphase multilevel inverter form an integer number N groups, each group including a single inverter stage from each of the inverter phase leg circuits, the N groups including a first group having M first inverter stages connected between the reference node and a second group, an Nth group having M final inverter stages connected between an (N-1)th group and the corresponding inverter phase output node, and N-2 intermediate groups individually having M final inverter stages connected between a preceding group and a succeeding group; and
wherein the processor is further operative according to the program instructions to determine the selected set of M of the inverter stages as a selected one of the groups that includes an inverter stage associated with the suspected inverter stage fault.

10. The controller of claim 6, wherein the processor is further operative according to the program instructions, in response to bypassing of the selected set of M of the inverter stages, to provide switching control signals to the remaining N-1 non-bypassed inverter stages of each of the inverter phase leg circuits to cause the multilevel inverter to provide phase voltage signals at the inverter phase output nodes to drive a load.

11. The controller of claim 6 or 10,
wherein the inverter stages of the a multiphase multilevel inverter form an integer number N groups, each group including a single inverter stage from each of the inverter phase leg circuits, the N groups including a first group having M first inverter stages connected between the reference node and a second group, an Nth group having M final inverter stages connected between an (N-1)th group and the corresponding inverter phase output node, and N-2 intermediate groups individually having M final inverter stages connected between a preceding group and a succeeding group; and
wherein the processor is further operative according to the program instructions to determine the selected set of M of the inverter stages as a selected one of the groups that includes an inverter stage associated with the suspected inverter stage fault.

12. A non-transitory computer readable medium comprising computer executable instructions that, when executed by a processor operating a multiphase multilevel inverter which includes M inverter phase leg circuits that individually include N inverter stages with corresponding stage outputs connected in series between a reference node and a corresponding inverter phase output node, M being greater than 2, N being greater than 2, cause the processor to:
provide bypass signals in response to a suspected inverter stage fault to concurrently bypass the stage outputs of a selected set of M of the inverter stages, the selected set of inverter stages including a single inverter stage from each of the inverter phase leg circuits, the selected set of inverter stages being connected to secondaries of a phase shift transformer at M different phase relationships to control harmonic distortion in a current of the transformer primary in response to a suspected inverter stage fault.

13. The non-transitory computer readable medium of claim 12, further comprising computer executable instructions that, when executed by the processor, cause the processor to provide switching control signals to at least some of the inverter stages to cause the multilevel inverter to provide phase voltage signals at the inverter phase output nodes to drive a load.

14. The non-transitory computer readable medium of claim 12 or 13, further comprising computer executable instructions that, when executed by the processor, cause the processor, in response to bypassing of the selected set of M of the inverter stages, to provide switching control signals to the remaining N-1 non-bypassed inverter stages of each of the inverter phase leg circuits to cause the multilevel inverter to provide phase voltage signals at the inverter phase output nodes to drive a load.
